# FASCICULE DE BREVET EUROPEEN

(11) **EP 2 193 955 B1**
(45) Date de publication et mention de la délivrance du brevet: **12.10.2011**
(21) Numéro de dépôt: 09177933.0
(22) Date de dépôt: 03.12.2009
(51) Int. Cl.: B60N 2/28, B60R 22/10, B60R 22/48

(54) **Siège automobile pour enfant à indicateur visuel de serrage du harnais, et indicateur visuel correspondant.**
Kinderautositz mit optischer Anzeige des Gurtverschlusses und entsprechende optische Anzeige
Automobile seat for a child with visual indicator of harness tightening, and corresponding visual indicator.

(30) Priorité: 04.12.2008 FR 0858274
(43) Date de publication de la demande: 09.06.2010
(73) Titulaire: Dorel France SA, 49309 Cholet Cedex (FR)
(72) Inventeur: Biaud, Richard, 49340, TREMENTINES (FR); Renaudin, François, 49300, CHOLET (FR)
(74) Mandataire: Bioret, Ludovic

(56) Documents cités:
- EP-A- 0 931 691
- EP-A- 1 767 408
- WO-A-2005/092676
- WO-A-2005/108154

## Description

### 1. Domaine de l'invention

Le domaine de l'invention est celui de la puériculture. Plus précisément, l'invention concerne le domaine de la sécurité des enfants transportés dans les automobiles dans des siéges prévus à cet effet, dits sièges auto, ou sièges pour enfant.

### 2. Solutions de l'art antérieur

Dans les automobiles, les enfants en bas âge sont couramment installés en position assise dans des sièges pour enfant, eux-mêmes solidarisés à des sièges pour adulte du véhicule. De très nombreux modèles de siège existent, parmi lesquels celui divulgué par le document EP 0 931 691 servant de base pour le preambule de la revendication 1 qui ont pour rôle principal d'assurer la sécurité de l'enfant en cas de choc.

Pour cela, l'enfant doit être maintenu dans son siège par un harnais. Les harnais sont constitués de sangles liées entre elles et fixées au siège pour enfant au moins entre les jambes de l'enfant, sur ses côtés et par-dessus ses épaules. De façon classique, un dispositif de verrouillage situé au centre du harnais permet de boucler (solidariser) ou de déboucler (désolidariser) les sangles.

Pour être efficaces, les sangles constituant le harnais doivent être suffisamment tendues pour que le harnais soit ajusté à l'enfant (en fonction de sa taille, sa corpulence et ses vêtements...), de façon à limiter le déplacement du corps en cas de choc. Pour cela, différents dispositifs de réglage existent. Ces dispositifs peuvent être installés sur chacune des sangles passant sur les épaules de l'enfant, afin d'augmenter ou de diminuer leur longueur. Sur d'autres modèles de siège, un seul dispositif de réglage centralisé permet de diminuer ou d'augmenter la longueur de plusieurs sangles là fois.

Pour permettre à un adulte installant un enfant dans un siège de vérifier que les sangles du harnais sont suffisamment serrées, des indicateurs de tension de sangle comme ceux divulgués par les documents EP 1 767 408, WO 2005/09 26 76 et WO 2005/108 154, sont généralement prévus. Ces indicateurs peuvent être situés sur une ou plusieurs des sangles devant être tendues et délivrent une indication-visuelle, différente selon que la tension de la sangle est suffisante (par exemple par un voyant vert) ou non (par exemple par un voyant rouge).

L'information donnée par ces indicateurs permet d'améliorer les conditions d'installation de l'enfant dans son siège, et donc d'améliorer sa sécurité. Cependant ces indicateurs peuvent également engendrer un stress chez les parents ou les adultes installant l'enfant. En effet, les mouvements de l'enfant, une fois qu'il est installé, sont susceptibles de modifier l'indication de tension donnée par l'indicateur. Ainsi, un mouvement d'un enfant correctement installé dans son siège pourra détendre une sangle suffisamment pour qu'un indicateur de tension de sangle donne l'information que cette sangle n'est pas suffisamment tendue.

Cette légère baisse de la tension de la sangle, qui peut être momentanée, est normale et n'est pas préjudiciable à la sécurité de l'enfant. Les tolérances de conception sont telles que ces variations sont acceptables, dès lors que le harnais a été suffisamment ajusté lors de l'installation. Cependant, cette indication que la tension est insuffisante peut inquiéter les parents, et les inciter à vérifier régulièrement l'indicateur. Cette situation peut s'avérer très dangereuse si l'adulte conduisant le véhicule est incité à se retourner pour vérifier l'indicateur, voire à tenter, tout en conduisant, de resserrer les sangles du harnais de l'enfant.

Par ailleurs, cette inquiétude générée chez les parents peut inciter ceux-ci à tendre de façon excessive les sangles, ce qui peut engendrer une gêne pour l'enfant.

### 3. Objectifs de l'invention

L'invention a notamment pour objectif de pallier ces inconvénients de l'art antérieur.

Plus précisément, un objectif de l'invention est de fournir un indicateur permettant de donner à un adulte une information relative à l'installation correcte de l'enfant dans un siège pour enfant en évitant de générer un stress ou une inquiétude inutile pour cet adulte, en cours de déplacement.

Un autre objectif de l'invention est de fournir un indicateur d'installation correcte simple et efficace.

Un autre objectif de l'invention est de mettre en oeuvre un tel indicateur qui soit particulièrement simple à fabriquer, à installer et à utiliser.

### 4. Résumé de l'invention

Ces objectifs, ainsi que d'autres qui apparaîtront par la suite, sont atteints à l'aide d'un siège automobile pour enfant, comprenant un harnais de sécurité et des moyens de serrage dudit harnais, mettant en oeuvre une sangle de serrage circulant dans un bloqueur unidirectionnel et dont une extrémité libre s'étend à l'avant de l'assise dudit siège, de façon à pouvoir être saisie et tirée par un utilisateur pour serrer ledit harnais, qui, selon l'invention comprend un indicateur visuel de serrage correct, monté entre ledit bloqueur unidirectionnel et ladite extrémité libre,
et pouvant prendre temporairement une position d'indication de serrage correct, au moment où l'utilisateur applique sur ladite extrémité libre une tension de serrage suffisante, de façon que l'utilisateur sache que le serrage est correct au moment du serrage, ladite extrémité libre étant ensuite non tendue.

L'indicateur visuel peut prendre temporairement une position d'indication de serrage insuffisant, lorsqu'une tension est appliquée sur ladite extrémité libre mais que cette tension est insuffisante.

L'indicateur visuel peut prendre une position d'indication d'inactivité, lorsqu'aucune action n'est effectuée sur ladite extrémité libre.

L'approche de l'invention repose sur une approche nouvelle et inventive, par rapport aux techniques connues d'indication de tension de sangle, qui sont des indicateurs permanents, placés sur une portion du harnais devant être tendus en permanence. Il ne s'agit pas, selon l'invention, de fournir un tel indicateur permanent, mais au contraire de fournir une information instantanée d'installation correcte de l'enfant, à l'instant où l'utilisateur serre le harnais.

Il est en effet essentiel que cette information soit fournie lors de l'installation, mais non utile, et parfois dangereux (par exemple lorsqu'un conducteur tente de vérifier en roulant que la tension reste correcte) que l'information soit permanente.

En d'autres termes, l'invention, sous sa forme la plus simple, délivre une information unique et temporaire, au moment du serrage, de serrage correct.

Ainsi, une fois le serrage effectué correctement, l'utilisateur relâche l'extrémité libre de la sangle, et l'indicateur se place dans un état inactif, distinct de l'état actif dans lequel deux positions de serrage (correct ou insuffisant) sont distinguées. Une fois l'installation terminée, l'indicateur ne donne pas d'information sur la qualité du serrage, mais indique seulement qu'il est inactif. L'indicateur ne sert réellement que pendant le serrage.

Il est important de noter que l'indicateur de serrage est placé, selon l'invention, sur une portion de sangle qui a une extrémité libre, c'est-à-dire qui n'est pas tendue dans son état normal, même lorsqu'un enfant est correctement sanglé dans le siège, et non sur une portion de sangle qui doit effectivement être tendue en permanence, si un enfant est sanglé. La position de l'indicateur sur cette portion de sangle libre est un aspect essentiel de l'invention, puisqu'il ne peut ainsi être actif que temporairement, au moment du serrage, allant ainsi à l'encontre des a priori de l'homme du métier.

Selon un mode de réalisation particulier, l'assise du siège présente une fenêtre de visualisation en regard de laquelle une surface d'information de l'indicateur visuel se déplace, la surface d'information comprenant au moins une zone distincte pour chacune des positions.

L'indicateur visuel peut ainsi être très simple et efficace.

Par exemple, l'indicateur visuel comprend un élément mobile en rotation autour d'un axe solidaire de l'assise dudit siège.

Selon un mode de réalisation, l'indicateur visuel peut présenter une pièce mobile sur laquelle circule ladite sangle de serrage, ladite pièce mobile étant conformée de façon à contrôler le déplacement dudit indicateur en fonction de la tension de ladite sangle de serrage.

Cette pièce mobile permet de relier très simplement la tension de la sangle à l'indication visuelle fournie.

L"indicateur visuel peut coopérer avec des moyens de rappel tendant à le ramener vers la position d'indication de serrage insuffisant et/ou vers la position d'indication d'inactivité. Par exemple, ces moyens de rappel comprennent un ressort spiral monté sur ledit axe.

Selon un mode de réalisation particulier, l'indicateur visuel présente une couleur verte, dans la position d'indication de serrage correct ; une couleur rouge, dans la position d'indication de serrage insuffisant ; et une couleur neutre, noire, blanche ou grise, dans la position d'indication d'inactivité.

Cependant, comme indiqué précédemment, il suffit que l'indicateur présente une information de serrage correct, dans la position d'indication de serrage correct. Les deux autres positions d'indication sont optionnelles, et peuvent être regroupées.

Selon un autre mode de réalisation, l'indicateur visuel peut délivrer une information lumineuse. L'indicateur visuel peut, dans ce cas, comprendre au moins une diode électroluminescente. Le siège automobile peut comprendre alors un capteur de tension délivrant un signal électrique relatif à la tension de serrage de la sangle.

L'indicateur visuel peut occuper lesdites positions d'indication de serrage correct, de serrage insuffisant et d'inactivité à l'aide respectivement d'un signal lumineux vert, rouge et éteint, par exemple.

L'invention concerne également un indicateur visuel pour siège automobile pour enfant selon les caractéristiques présentées ci-dessus.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 représente de façon simplifiée un exemple de siège pour enfant selon l'invention ;
- la figure 2 est une vue de coupe partielle du siège pour enfant de la figure 1;
- les figures 3, 4 et 5 sont des vues de détail, en coupe, du mécanisme de serrage et de l'indicateur de serrage des sangles du harnais du siège pour enfant de la figure 1, représentés respectivement en dehors d'une action de serrage, pendant une action de serrage de force insuffisante, et pendant une action de serrage de force suffisante ; et
- la figure 6 est un schéma blocs illustrant le fonctionnement de l'indicateur visuel lorsque celui-ci délivre un signal lumineux.

### 6. Description détaillée de l'invention

Le principe général de l'invention consiste à mettre en oeuvre un indicateur de tension de sangle sur une portion de sangle qui n'est pas destinée à être tendue de façon permanente, mais qui est tendue sous l'action de l'utilisateur quand celui-ci effectue le serrage des sangles du harnais. Cet indicateur fournit ainsi une indication instantanée permettant à l'utilisateur de savoir s'il a serré suffisamment, mais sera ensuite inactif.

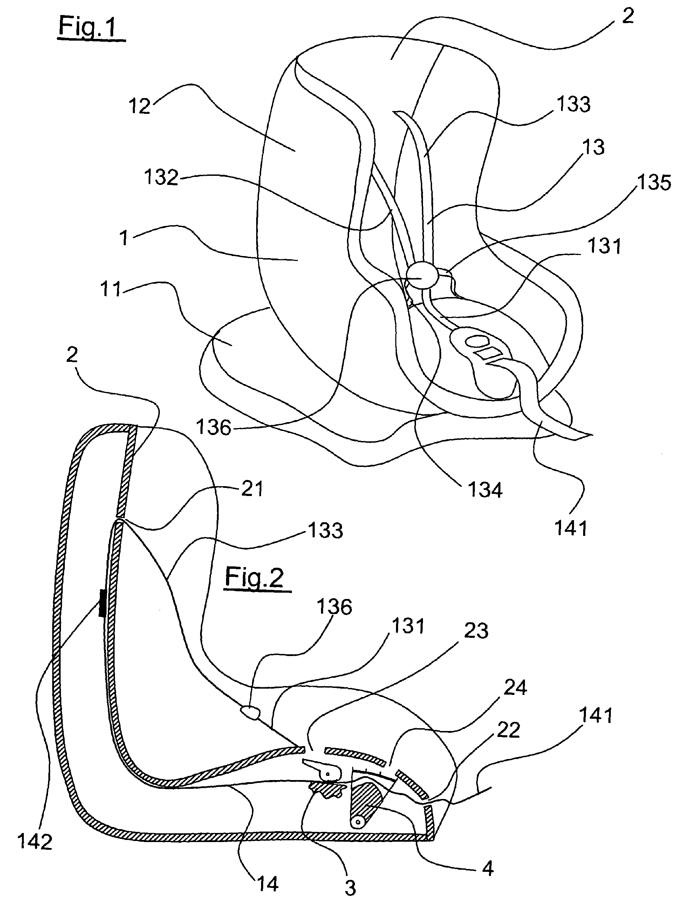

La figure 1 représente un siège automobile pour enfant selon un mode de réalisation de l'invention. Ce siège 1 comporte une embase 11 destinée à être fixée au véhicule automobile et une assise 12 prévue pour recevoir l'enfant. Un harnais de sécurité 13 est destiné à retenir l'enfant.

Pour des raisons d'efficacité et de conformité aux normes, ce harnais 13 est un harnais « 5 points ». Il présente ainsi une sangle 131 passant entre les jambes de l'enfant, deux sangles, ou bretelles, 132 et 133 passant sur les épaules de l'enfant et deux sangles 134 et 135 passant sur les côtés. Ces sangles se réunissent au niveau d'une boucle de verrouillage 136 qui permet de les assembler ou de les désassembler en fonction des besoins.

De façon classique, le réglage du harnais, qui permet de l'adapter à la corpulence de l'enfant, est effectué en réglant la longueur des bretelles 132, 133.

La figure 2 représente une vue en coupe partielle du siège pour enfant de la figure 1. On peut y voir notamment la paroi intérieure 2 du siège et une des bretelles 133 du harnais. Comme le montre cette figure, la paroi intérieure 2 du siège présente une ouverture 21 permettant le passage de la bretelle 133. A l'arrière de la paroi 2, les deux sangles 132 et 133 sont reliées à une même pièce de liaison 142, à laquelle est également liée une sangle de serrage 14. Ainsi, une traction sur la sangle de serrage 14 permet de réduire en même temps la longueur utile (c'est-à-dire s'étendant sur la face avant du siège) des bretelles 132 et 133, et donc de resserrer le harnais 13.

La sangle de serrage 14 est maintenue par un bloqueur unidirectionnel 3, qui permet d'éviter qu'elle ne se détende après avoir été tendue. La portion libre 141 de cette sangle de serrage 14, c'est-à-dire la portion qui est située entre le bloqueur unidirectionnel 3 et l'extrémité de la sangle 14 qui n'est pas liée à la pièce de liaison 142, dépasse du siège 1 par l'avant de celui-ci, en passant par une ouverture 22 définie dans la paroi intérieure du siège. Cette sangle 14 est ainsi très facilement accessible à l'utilisateur pour serrer le harnais 13.

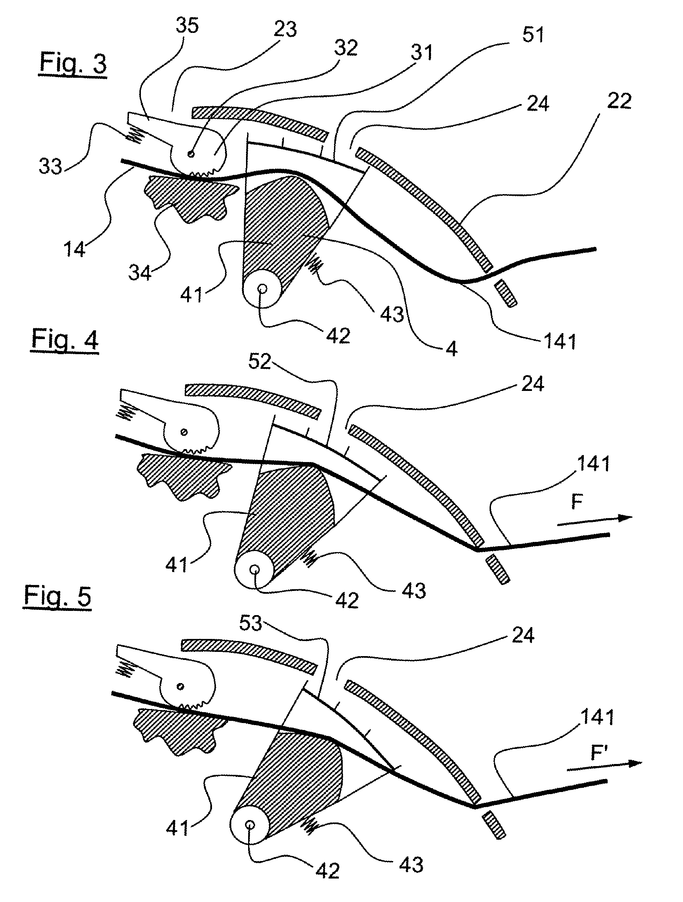

Les figures 3 à 5 permettent de voir le mécanisme de fonctionnement du bloqueur unidirectionnel 3. Ce bloqueur unidirectionnel 3, encore appelé auto-serreur, est connu en soi.Il peut par exemple s'agir de l'un de ceux utilisés par la Déposante sur les sièges de marque Bébé Confort (marque déposée).

Il comporte une came 31 pouvant pivoter autour d'un axe 32, et est maintenu sous l'effet de moyens de rappel (schématisés sous la référence 33) dans une position dans laquelle cette came plaque la sangle 14 contre une surface d'appui 34 et l'empêche de coulisser dans un sens (en l'occurrence, de la droite vers la gauche) tout en permettant son coulissement dans l'autre sens (en l'occurrence, de la gauche vers la droite). Un levier 35, accessible à l'utilisateur adulte grâce à une ouverture 23 ménagée dans la paroi intérieure du siège, permet de faire pivoter la came 31 afin de la placer dans une position permettant le coulissement de la sangle dans les deux sens. L'utilisateur peut ainsi, par une simple action sur le levier 35, desserrer le harnais 13.

Selon l'invention, la portion libre 141 de la sangle de serrage 14 coopère avec un indicateur visuel de serrage correct, ou indicateur de tension de sangle 4. Cet indicateur 4 permet de donner à l'utilisateur une information différente suivant le niveau de tension de la sangle 14. Pour cela, il comporte une pièce mobile 41 pouvant pivoter autour d'un axe 42 entre trois positions, représentées respectivement par les figures 3, 4 et 5. Cette pièce mobile 41 comporte une zone formant came 44 sur laquelle circule la sangle de serrage, la came étant conformée de façon à contrôler le déplacement de la pièce mobile 41 en fonction de la tension de la sangle de serrage 14.

Dans sa position représentée par la figure 3, qui est une position de repos ou position d'indication d'inactivité, la pièce mobile 41 induit une déviation sur le trajet de la portion libre 141 de la sangle de serrage 14 entre le bloqueur unidirectionnel 3 et l'ouverture 22. Des moyens de rappel (schématisés sous la référence 43) tendent à maintenir la pièce mobile 41 dans cette position. Aucune action n'étant exercée sur l'extrémité libre 141 de la sangle 14, celle-ci n'agit pas sur la pièce mobile 41.

Les moyens de rappel qui sont schématisés sous la référence 43 peuvent être avantageusement constitués par un ressort spiral monté sur l'axe 42.

Quand la pièce mobile 41 de l'indicateur 4 est dans cette position de repos, ou position d'indication d'inactivité, elle présente en face d'une fenêtre de visualisation 24 ménagée dans la paroi intérieure 2 du siège une première zone, ou portion, de surface d'information 51 fournissant une indication d'état inactif, signifiant simplement qu'aucune traction significative n'est exercée par l'utilisateur sur la portion de sangle 141, sans fournir d'information sur la bonne ou la mauvaise tension du harnais. Cette indication peut être donnée de façon particulièrement simple par une couleur neutre, par exemple noire, blanche ou grise, de la portion de surface 51.

Quand une traction est exercée sur la portion de sangle 141, comme le présentent les figures 4 et 5, cette portion de sangle agit sur la pièce mobile 41 de l'indicateur de tension de sangle qui pivote alors autour de son axe 42, à l'encontre du ressort 43.

La figure 4 montre une situation dans laquelle une force F insuffisante pour entraîner un serrage correct du harnais 13, est exercée par l'utilisateur sur la portion libre 141 de la sangle de serrage 14. Dans ce cas, l'action de la sangle 141 sur la pièce mobile 41 entraîne le positionnement en face de la fenêtre de visualisation 24 d'une seconde zone, ou portion, de surface d'information 52, qui peut être avantageusement de couleur rouge, donnant une indication de serrage insuffisant. Cette position représentée sur la figure 4 est appelée position d'indication de serrage insuffisant.

La figure 5 représente une position dans laquelle la traction exercée par l'utilisateur sur la portion de sangle 141 est suffisante pour que le harnais 13 soit suffisamment bien ajusté. Dans ce cas, la portion de sangle 141 est suffisamment tendue pour agir sur la pièce mobile 41 de façon à amener en face de la fenêtre de visualisation 24 sa troisième zone, ou portion, de surface d'information 53 donnant une indication de serrage correct. Cette surface peut par exemple être de couleur verte. Cette position est appelée position d'indication de serrage correct.

L'utilisateur peut ainsi de façon particulièrement simple contrôler, pendant qu'il tire sur l'extrémité libre de la sangle 141, si la traction qu'il exerce est suffisante. Tant que la couleur neutre ou rouge apparaît dans la fenêtre de visualisation 24, il sait qu'il ne tire pas assez fort. En revanche, une fois qu'il voit apparaître dans la fenêtre de visualisation 24 la couleur verte lui indiquant que la traction qu'il exerce est suffisante, il sait qu'il peut relâcher la sangle 141, le harnais étant suffisamment tendu. L'indicateur de tension de sangle ne lui donnera alors plus aucune indication de tension, la couleur neutre de la surface 51 apparaissant dans la fenêtre de visualisation, ce qui lui évitera des vérifications inutiles et pouvant être dangereuses. Il saura que le serrage est correct, puisque ceci lui a été confirmé lors de l'installation.

On comprend que l'information essentielle correspond à l'indication de serrage correct. Il est donc possible de regrouper les deuxième et troisième positions (ci-dessus à titre d'exemple rouge et neutre), voire de les supprimer. Dans ce dernier cas, en l'absence d'information, le système est soit inactif soit insuffisamment serré. La génération d'une information visuelle signifie que le serrage est suffisant, que l'enfant est correctement sanglé, et que l'utilisateur peut relâcher l'extrémité libre de la sangle de serrage.

Dans l'exemple présenté, l'indicateur visuel de serrage du harnais est mis en oeuvre sur une sangle permettant le serrage centralisé des deux bretelles du harnais. Bien évidemment, l'homme du métier pourra aisément appliquer un principe identique à d'autres mécanismes de serrage du harnais, par exemple placé au niveau des bretelles, dès lors que l'indicateur reflète la tension d'une portion de sangle libre, c'est-à-dire non tendue en permanence, et servant spécifiquement à assurer le serrage, lors de l'installation de l'enfant.

Il pourra également, sans sortir de l'invention, utiliser d'autre types de bloqueurs unidirectionnels ou d'indicateurs de tension de sangle.

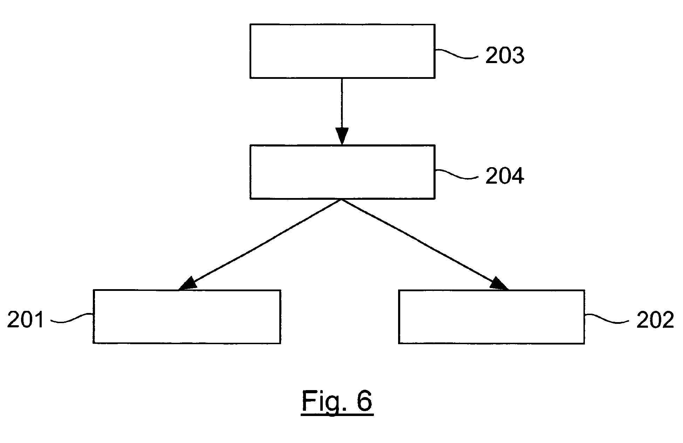

Un autre mode de réalisation est illustré sur la figure 6. Sur cette figure, l'indicateur visuel 4 présente un signal lumineux pouvant être allumé lorsque le serrage est suffisant, et éteint sinon. Dans l'exemple illustré, on a prévu, comme précédemment, un éclairage par exemple à l'aide d'une diode électroluminescente 201 rouge pour indiquer un serrage insuffisant et une diode électroluminescente 202 verte pour indiquer un serrage correct, aucune de ces deux diodes n'étant allumée dans une position d'inactivité où aucune tension n'est appliquée sur l'extrémité libre de la sangle.

Cet indicateur visuel peut être couplé, comme dans cet exemple, à un capteur de tension de sangle 203 qui délivre un signal électrique représentatif de la tension appliquée à la portion de sangle. Dans ce cas, le circuit électrique 204 peut être très simple, la tension électrique de ce signal pouvant être configurée de façon à dépasser la tension de seuil d'une diode électroluminescente (DEL), et donc entraîner l'éclairage, lorsque la tension de sangle est suffisante.

Selon une approche plus complexe, l'indicateur peut par exemple comporter une diode DEL pouvant prendre plusieurs couleurs pour délivrer une information sur le serrage de la sangle à l'utilisateur.

En variante, l'indicateur peut comporter plusieurs diodes DEL différentes, comme dans l'exemple illustré, chacune correspondant à une position de l'indicateur visuel.

Un intérêt de disposer d'au moins deux indications lumineuses (serrage correct et serrage incorrect et/ou inactif) est que l'utilisateur est informé que le système électrique fonctionne correctement. Si aucun signal lumineux n'est généré, ceci signifie qu'un problème est détecté, et par exemple une usure de la pile d'alimentation.

Il est bien sûr possible de prévoir de distribuer plusieurs indicateurs lumineux sur le siège, par exemple pour qu'ils soient visibles sur chaque côté du siège. L'utilisation de signaux électriques permet en effet de déporter aisément les indicateurs (et le cas échéant de les combiner, par exemple avec un capteur de bonne installation du siège, au niveau des pinces Isofix ou d'un passage de sangle de ceinture de sécurité du véhicule).

## Revendications

1. Siège automobile pour enfant, comprenant un harnais de sécurité (13) et des moyens de serrage dudit harnais, mettant en oeuvre une sangle de serrage (14) circulant dans un bloqueur unidirectionnel (3) et dont une extrémité libre (141) s'étend à l'avant de l'assise dudit siège, de façon à pouvoir être saisie et tirée par un utilisateur pour serrer ledit harnais,
**caractérisé en ce qu'**il comprend un indicateur visuel (4) de serrage correct, monté entre ledit bloqueur unidirectionnel (3) et ladite extrémité libre (141), et pouvant prendre temporairement une position d'indication de serrage correct (53), au moment où l'utilisateur applique sur ladite extrémité libre une tension de serrage suffisante, de façon que l'utilisateur sache que le serrage est correct au moment du serrage, ladite extrémité libre (141) étant ensuite non tendue.

2. Siège automobile pour enfant selon la revendication 1, **caractérisé en ce que** ledit indicateur visuel (4) prend temporairement une position d'indication de serrage insuffisant (52), lorsqu'une tension est appliquée mais insuffisante.

3. Siège automobile pour enfant selon l'une quelconque des revendications 1 et 2, **caractérisé en ce que** ledit indicateur visuel (4) prend une position d'indication d'inactivité (51), lorsqu'aucune action n'est effectuée sur ladite extrémité libre (141).

4. Siège automobile pour enfant selon l'une quelconque des revendications 1 à 3, **caractérisé en ce que** l'assise dudit siège présente une fenêtre de visualisation (24) en regard de laquelle une surface d'information dudit indicateur visuel (4) se déplace.

5. Siège automobile pour enfant selon la revendication 4 et l'une quelconque des revendications 2 et 3, **caractérisé en ce que** ladite surface d'information comprend au moins une zone distincte (51, 52, 53) pour chacune desdites positions.

6. Siège automobile pour enfant selon l'une quelconque des revendications 4 et 5, **caractérisé en ce que** ledit indicateur visuel (4) comprend un élément mobile en rotation autour d'un axe (42) solidaire de l'assise dudit siège.

7. Siège automobile pour enfant selon l'une quelconque des revendications 4 à 6, **caractérisé en ce que** ledit indicateur visuel présente une pièce mobile (41) sur laquelle circule ladite sangle de serrage (14), ladite pièce mobile étant conformée de façon à contrôler le déplacement dudit indicateur en fonction de la tension de ladite sangle de serrage.

8. Siège automobile pour enfant selon l'une quelconque des revendications 4 à 7, **caractérisé en ce que** ledit indicateur visuel (4) coopère avec des moyens de rappel (43) tendant à le ramener vers ladite position d'indication de serrage insuffisant et/ou vers ladite position d'indication d'inactivité.

9. Siège automobile pour enfant selon les revendications 6 et 8, **caractérisé en ce que** lesdits moyens de rappel comprennent un ressort spiral monté sur ledit axe.

10. Siège automobile selon l'une quelconque des revendications 3 à 9, **caractérisé en ce que** ledit indicateur visuel présente :
- une couleur verte, dans ladite position d'indication de serrage correct ;
- une couleur rouge, dans ladite position d'indication de serrage insuffisant ;
- une couleur neutre, noire, blanche ou grise, dans ladite position d'indication d'inactivité.

11. Siège automobile pour enfant selon l'une quelconque des revendications 1 à 3, **caractérisé en ce que** ledit indicateur visuel délivre une information lumineuse.

12. Siège automobile pour enfant selon la revendication 11, **caractérisé en ce que** ledit indicateur visuel comprend au moins une diode électroluminescente.

13. Siège automobile pour enfant selon l'une quelconque des revendications 11 et 12, **caractérisé en ce qu'**il comprend un capteur de tension délivrant un signal électrique relatif à la tension de serrage de la sangle.

## Claims

1. Child car seat, comprising a safety harness (13) and means for clamping the harness, using a clamping strap (14) which travels in a unidirectional blocker (3) and of which one free end (141) extends at the front of the cushion of the seat in order to be able to be gripped and pulled by a user in order to clamp the harness,
**characterised in that** it comprises a visual indicator (4) for correct clamping, which is mounted between the unidirectional blocker (3) and the free end (141) and which can temporarily assume a position for indicating correct clamping (53), at the time at which the user applies to the free end adequate clamping tension so that the user knows that the clamping is correct at the time of clamping, the free end (141) subsequently not being tensioned.

2. Child car seat according to claim 1, **characterised in that** the visual indicator (4) temporarily assumes a position (51) for indicating inadequate clamping when a tension is applied but is insufficient.

3. Child car seat according to either claim 1 or claim 2, **characterised in that** the visual indicator (4) assumes a position (51) for indicating inactivity (51) when no action is carried out on the free end (141).

4. Child car seat according to any one of claims 1 to 3, **characterised in that** the cushion of the seat has a display aperture (24) opposite which an information surface of the visual indicator (4) moves.

5. Child car seat according to claim 4 and either claim 2 or claim 3, **characterised in that** the information surface comprises at least one separate zone (51, 52, 53) for each of the positions.

6. Child car seat according to either claim 4 or claim 5, **characterised in that** the visual indicator (4) comprises an element which can be moved in rotation about an axis (42) which is fixedly joined to the cushion of the seat.

7. Child car seat according to any one of claims 4 to 6, **characterised in that** the visual indicator has a movable component (41) on which the clamping strap (14) travels, the movable component being shaped in order to control the movement of the indicator in accordance with the tension of the clamping strap.

8. Child car seat according to any one of claims 4 to 7, **characterised in that** the visual indicator (4) co-operates with return means (43) which tend to return it to the position for indicating insufficient clamping and/or to the position for indicating inactivity.

9. Child car seat according to claims 6 and 8, **characterised in that** the return means comprise a helical spring which is mounted on the axis.

10. Car seat according to any one of claims 3 to 9, **characterised in that** the visual indicator has:
- a green colour, in the position for indicating correct clamping;
- a red colour in the position for indicating inadequate clamping;
- a neutral, black, white or grey colour in the position for indicating inactivity.

11. Child car seat according to any one of claims 1 to 3, **characterised in that** the visual indicator provides illuminated information.

12. Child car seat according to claim 11, **characterised in that** the visual indicator comprises at least one light-emitting diode.

13. Child car seat according to either claim 11 or claim 12, **characterised in that** it comprises a tension sensor which transmits an electrical signal relating to the clamping tension of the strap.

## Patentansprüche

1. Kraftfahrzeug-Kindersitz, umfassend ein Sicherheitsgeschirr (13) und Mittel zum Straffen dieses Geschirrs, die einen Straffgurt (14) verwenden, der einen unidirektionalen Gurtstopper (3) durchläuft und dessen freies Ende (141) auf der Vorderseite der Sitzschale derart verläuft, dass es von einem Benutzer gegriffen und gezogen werden kann, um das Geschirr zu straffen,
**dadurch gekennzeichnet, dass** er einen Sichtanzeiger (4) der korrekten Straffung umfasst, der zwischen dem unidirektionalen Gurtstopper (3) und dem freien Ende (141) montiert ist und temporär eine Stellung zur Anzeige der korrekten Straffung (53) einnehmen kann, wenn der Benutzer eine ausreichende Anzugsspannung an das freie Ende anlegt, damit der Benutzer erkennt, ob die Straffung im Moment des Anziehens korrekt ist, wobei dieses freie Ende (141) danach nicht gespannt ist.

2. Kraftfahrzeug-Kindersitz nach Anspruch 1, **dadurch gekennzeichnet, dass** der Sichtanzeiger (4) temporär eine Stellung zur Anzeige der unzureichenden Straffung (52) einnimmt, wenn eine nicht ausreichende Spannung angelegt wird.

3. Kraftfahrzeug-Kindersitz nach einem der Ansprüche 1 und 2, **dadurch gekennzeichnet, dass** der Sichtanzeiger (4) temporär eine Stellung zur Anzeige der Inaktivität (51) einnimmt, wenn keine Einwirkung auf das freie Ende (141) ausgeübt wird.

4. Kraftfahrzeug-Kindersitz nach einem der Ansprüche 1 bis 3, **dadurch gekennzeichnet, dass** die Sitzschale ein Anzeigefenster (24) aufweist, vor welchem sich eine Informationsfläche des Sichtanzeigers (4) bewegt.

5. Kraftfahrzeug-Kindersitz nach Anspruch 4 und nach einem der Ansprüche 2 und 3, **dadurch gekennzeichnet, dass** diese Informationsfläche mindestens eine unterschiedliche Zone (51, 52, 53) für jede der Positionen umfasst.

6. Kraftfahrzeug-Kindersitz nach einem der Ansprüche 4 und 5, **dadurch gekennzeichnet, dass** der Sichtanzeiger (4) ein Element umfasst, das um eine Achse (42) drehbar ist, die mit der Sitzschale fest verbunden ist.

7. Kraftfahrzeug-Kindersitz nach einem der Ansprüche 4 bis 6, **dadurch gekennzeichnet, dass** der Sichtanzeiger ein bewegliches Teil (41) umfasst, auf welchem der Straffgurt (14) abläuft, wobei dieses bewegliche Teil derart ausgelegt ist, dass es die Bewegung der Anzeige in Abhängigkeit von der Spannung des Straffgurts steuert.

8. Kraftfahrzeug-Kindersitz nach einem der Ansprüche 4 bis 7, **dadurch gekennzeichnet, dass** der Sichtanzeiger (4) mit Rückstellmitteln (43) zusammenwirkt, die darauf hinwirken, diesen in die Stellung zur Anzeige einer unzureichenden Straffung und/oder in die Stellung zur Anzeige der Inaktivität zurückzustellen.

9. Kraftfahrzeug-Kindersitz nach den Ansprüchen 6 und 8, **dadurch gekennzeichnet, dass** die Rückstellmittel (43) eine Spiralfeder umfassen, die an die Achse montiert ist.

10. Kraftfahrzeug-Kindersitz nach einem der Ansprüche 3 bis 9, **dadurch gekennzeichnet, dass** der Sichtanzeiger umfasst:
- eine grüne Farbe in der Stellung zur Anzeige der korrekten Straffung;
- eine rote Farbe in der Stellung zur Anzeige der unzureichenden Straffung;
- eine neutrale Farbe, schwarz, weiß oder grau, in der Stellung zur Anzeige der Inaktivität.

11. Kraftfahrzeug-Kindersitz nach einem der Ansprüche 1 bis 3, **dadurch gekennzeichnet, dass** der Sichtanzeiger eine leuchtende Information ausgibt.

12. Kraftfahrzeug-Kindersitz nach Anspruch 11, **dadurch gekennzeichnet, dass** der Sichtanzeiger mindestens eine Leuchtdiode umfasst.

13. Kraftfahrzeug-Kindersitz nach einem der Ansprüche 11 und 12, **dadurch gekennzeichnet, dass** dieser einen Spannungssensor umfasst, der ein elektrisches Signal bezüglich der Anzugsspannung des Gurts ausgibt.
